**Europäisches Patentamt**

**European Patent Office**

**Office européen des brevets**

(19)

(11) Veröffentlichungsnummer: **0 469 402 A2**

## EUROPÄISCHE PATENTANMELDUNG

(12)

(21) Anmeldenummer: **91112077.2**

(22) Anmeldetag: **19.07.91**

(51) Int. Cl.5: **C08J 11/04**, C12S 13/00

(30) Priorität: **27.07.90 DE 4023907**

(43) Veröffentlichungstag der Anmeldung:
**05.02.92 Patentblatt 92/06**

(84) Benannte Vertragsstaaten:
**AT BE CH DE ES FR GB IT LI LU NL SE**

(71) Anmelder: **BELLAND AG**
**c/o ATAG Allgemeine Treuhand AG,**
**Westbahnhofstrasse 2**
**CH-4500 Solothurn(CH)**

(72) Erfinder: **Gass, Michael, Dr.**
**Schöngrundstrasse 39**
**CH-4600 Olten(CH)**

(74) Vertreter: **Patentanwälte RUFF, BEIER und**
**SCHÖNDORF**
**Neckarstrasse 50**
**W-7000 Stuttgart 1(DE)**

(54) Verfahren zur Aufbereitung und Reinigung von in alkalischem Medium löslichen Polymeren.

(57) Verfahren zur Aufbereitung von mit biologischen Material verunreinigten Polymeren durch Auflösen in wässrig alkalischem Medium, Abtennen der ungelösten Bestandteile, Entfernen der biologischen Verunreinigungen durch bakterielle Zersetzung und Ausfällen der Polymere durch Ansäuern.

EP 0 469 402 A2

Die Erfindung betrifft ein Verfahren zur Aufbereitung und Reinigung von in alkalischem Medium löslichen, mit biologischem Material und ggf. anderen Stoffen verunreinigten festen Polymeren, bei dem die verunreinigten Polymere in wässrig alkalischem Medium gelöst, von nicht gelösten Verunreinigungen befreit und durch Ansäuern ausgefällt und wiedergewonnen werden.

Lebensmittelverpackungen bestehen heute weitgehend aus Kunststoff. Dies gilt auch für Lebensmittelverpackungen und Essgeschirr in den sogenannten Fastfood-Restaurants sowie für Party-Geschirr. Es wurde bereits vorgeschlagen, solche Portionsverpackungen und Essgeschirr wie Teller, Becher, Trinkhalme und Besteck, aus in neutralem und saurem wässrigem Medium stabilen aber in alkalischem Medium auflösbaren Kunststoffen herzustellen, um einerseits das Abfallproblem zu entschärfen, andererseits wiederverwendbare Kunststoffe einer erneuten Verwertung zuführen zu können. Dies empfiehlt sich besonders dort, wo Kunststoffe gleicher und ähnlicher Art in gehäuftem Maße als Abfall anfallen, wie bei Fastfood-Restaurants, Kantinen, öffentlichen Bewirtungen, Festen und dergleichen. Es wurde vorgeschlagen, die Kunststoffabfälle mitsamt den Verunreinigungen mit wässrigem Alkali zu versetzen, um damit die Kunststoffe aufzulösen, die Kunststofflösung abzutrennen und die Kunststoffe durch Ansäuern wieder auszufällen.

Diese Vorschläge konnten bisher noch nicht zu einer Realisierung führen. Dies hängt vor allem damit zusammen, daß die ausgefällten Kunststoffe nicht mit einer für eine Wiederverarbeitung geeigneten Reinheit anfallen. Der Erfindung liegt daher die Aufgabe zugrunde, die vorgeschlagene Verfahrensweise zu verbessern, um wiedergewonnene Kunststoffe mit höherer Reinheit zu erhalten.

Das erfindungsgemäße Verfahren ist dadurch gekennzeichnet, daß die Polymerlösung vor dem Ansäuern zur Entfernung biologischer Verunreinigungen einer bakteriellen Zersetzung unterworfen wird.

Es hat sich gezeigt, daß bei der Auflösung der verunreinigten Kunststoffe auch organische, vorwiegend biologische, Verunreinigungen mit aufgelöst werden und zwar insbesondere durch alkalische Hydrolyse. Solche Stoffe können dann beim Ansäuern der Polymerlösung mit ausfallen, wie beispielsweise die Fettsäuren hydrolysierter Fette, und dadurch die Polymere verunreinigen. Durch die bakterielle Zersetzung können diese unerwünschten gelösten Bestandteile gezielt beseitigt werden, ohne daß die Kunststoffe angegriffen werden. Als bakterielle Zersetzung eignet sich besonders eine anaerobe Zersetzung, die auch als anaerobe Gärung bezeichnet werden kann. Der durch eine solche anaerobe Zersetzung erreichte biologische Abbau beseitigt wirksam die unerwünschten Begleitstoffe, ohne die wiedergewinnbaren Kunststoffe in unerwünschter Weise zu beeinträchtigen. Die Polymerlösung wird vor der bakteriellen Zersetzung vorzugsweise von nicht gelösten Begleitstoffen befreit, beispielsweise durch Zentrifugieren oder Filtrieren, so daß im wesentlichen nur gelöste biologische Verunreinigungen mitgeführt und einer bakteriellen Zersetzung zugeführt werden. Die abgetrennten Feststoffe können getrennt aufgearbeitet, insbesondere kompostiert werden. Durch das erfindungsgemäße Verfahren können die Polymere vollständig von den Verunreinigungen befreit werden und fallen nach dem Ausfällen in reiner Form an.

Die bakterielle Zersetzung wird vorzugsweise mit Hilfe von Klärschlamm eingeleitet und durchgeführt. Klärschlamm enthält zahlreiche verschiedene Bakterienarten, die sich auf die jeweiligen biologischen Verunreinigungen der Polymerlösung einstellen können. Die zu den biologischen Verunreinigungen passenden Bakterien wachsen dann bevorzugt zu Lasten der übrigen Bakterien, so daß mit der Zeit Reinkulturen bzw. bevorzugte Mischkulturen von selbst entstehen. Es können jedoch auch Rein- bzw. Mischkulturen von vornherein eingesetzt werden, insbesondere dann, wenn sie aus vorhergehenden Verfahrensführungen zur Verfügung stehen.

Die biologische Zersetzung wird vorzugsweise in einem Bioreaktor, insbesondere einem Fließbettreaktor durchgeführt, in dem die Bakterien immobilisiert sind. Hierzu eignen sich Bioreaktoren mit Füllkörpern, insbesondere Füllringen, Kugeln oder Granulaten, wobei Granulate aus Zeolithen bevorzugt sind. Die bakterielle Zersetzung wird vorzugsweise kontinuierlich geführt, d.h. unter Gleichgewichtsbedingungen zwischen Zufuhr biologischer Verunreinigungen und bakterieller Zersetzung. Um anaerobe Bedingungen zu Beginn der bakteriellen Zersetzung zur Verfügung zu stellen, kann der Bioreaktor in üblicher Weise vor einer Befüllung mit Inertgas gespült werden. Es ist auch möglich, den Bioreaktor zur Entfernung von Sauerstoff anfänglich vollständig mit Flüssigkeit zu füllen.

Bei der anaeroben bakteriellen Zersetzung entstehen als Zersetzungsprodukte vorwiegend $CO_2$ und Methan. Diese können bei einer bevorzugten Verfahrensführung an örtlich getrennten Stellen entnommen werden. Das Methan kann als Heizgas eingesetzt werden, um die bei der Polymerauflösung gewünschte erhöhte Temperatur zu erhalten.

Der die lösbaren Polymere enthaltende Abfall ist insbesondere Abfall aus der Gastronomie u.dgl. und kann neben Speiseresten auch noch Papier und als sogenannten Fremdmüll üblicherweise auch noch Zigarettenstummel, Streichhölzer und andere begleitende Verunreinigungen enthalten.

Der Abfall kann zunächst mechanisch zerkleinert und dann in alkalisch wässrigem Milieu aufgelöst werden. Die vorherige mechanische Zerkleinerung ist jedoch nicht erforderlich. Eine Auflösung des ganzen Abfalls unter mechanischem Rühren bewirkt aufgrund der dabei auftretenden hohen Scherkräfte eine schnelle und wirksame Auflösung auch ohne vorherige mechanische Zerkleinerung. Die Auflösung der Polymere wird vorzugsweise bei pH-Werten von 11 bis 12,5 durchgeführt, wobei in der Regel pH-Werte zwischen 11 und 12 zur Anwendung kommen. Die Auflösungstemperatur liegt vorzugsweise zwischen Raumtemperatur und 70°C, wobei ca. 60°C bevorzugt sind. Die Auflösungsdauer liegt normalerweise zwischen 30 und 60 min. Bei der Auflösung wird eine Suspension erhalten. Das Abtrennen der nicht gelösten Feststoffe wird vorteilhaft durch Zentrifugieren, insbesondere mit einer Dekanterzentrifuge erreicht. Das Abtrennen der Feststoffe erfolgt vorzugsweise im wesentlichen bei der selben Temperatur wie das Auflösen.

Das erfindungsgemäße Verfahren eignet sich bereits zur Wiederaufarbeitung von Kunststoffabfällen, die nur geringe Mengen an auflösbarem Kunststoff, wie 5 bis 10 Gew.-% enthalten. Die zur Auflösung eingesetzte Flüssigkeitsmenge wird, abgesehen von einer für die Verarbeitbarkeit erforderlichen Mindestmenge, im wesentlichen auf den Gehalt an auflösbaren Kunststoffen im Abfall abgestellt. Entsprechendes gilt für die Menge an eingesetztem Alkali. Vorzugsweise werden Flüssigkeits- und Alkalimenge so eingestellt, daß nach der Fest/Flüssigtrennung Polymerlösungen mit einem Gehalt an mindestens 0,5 Gew.-% Polymer, vorzugsweise 7 bis 10 Gew.-% Polymer erhalten werden. Bei einem Polymergehalt über ca. 15 Gew.-% werden die Lösungen infolge ihrer hohen Viskosität schwer handhabbar.

Die bakterielle Zersetzung wird vorzugsweise im sogenannten Mesophil-Bereich also bei Gärtemperaturen von ca. 35 bis 40°C durchgeführt. Die anaerobe Gärung ist endotherm. Der Wärmebedarf wird durch die Lösungstemperatur der zufließenden Polymerlösung gedeckt. Der pH-Wert während der bakteriellen Zersetzung liegt vorzugsweise zwischen 8 und 9, insbesondere bei ca. 8,5. Vorzugsweise ist zwischen der Fest/Flüssigtrennung und dem Bioreaktor, der bei der anaeroben Zersetzung auch als Methanreaktor bezeichnet werden kann, eine Pufferzone vorgesehen, in der sowohl die Temperatur als auch der pH-Wert der von der Fest/Flüssigtrennung kommenden Polymerlösung abgesenkt werden. Diese Absenkung kann mit besonderem Vorteil durch Rückführen einer bei der Ausfällung der Polymere anfallenden Filtratlösung vorgenommen werden, worauf noch näher eingegangen wird.

Im Bioreaktor können auch andere "vergärbare" Verunreinigungen, wie Farbstoffe, zersetzt werden. Im Bioreaktor entstehendes Methan entweicht gasförmig. Bei der Vergärung ebenfalls entstehendes Kohlendioxid wird im wesentlichen vom vorhandenen Alkali als Carbonat bzw. Hydrogencarbonat gebunden und verbleibt somit in der Lösung und kann beim Ansäuern während der Ausfällungsreaktion freigesetzt werden.

Die Fällung kann durch Zugabe üblicher saurer Fällungsreagentien, wie anorganische Säuren, insbesondere Mineralsäuren, durchgeführt werden, wobei Schwefelsäure und Phosphorsäure bevorzugt sind. In speziellen Fällen eignen sich auch sauer reagierende Salze, insbesondere Aluminiumsulfat. Die Zugabe solcher Salze ist dann bevorzugt, wenn beispielsweise ausgefälltes Aluminiumoxydhydrat als Füllstoff im gefällten Polymer erwünscht ist. Mit Vorteil kommen jedoch auch organische Säuren als Fällungsreagentien in Frage, vorzugsweise biologisch abbaubare organische Säuren, die bei der bakteriellen Zersetzung mitvergoren werden. Auf diese Weise wird eine unschädliche Beseitigung des Fällungsreagens erreicht. Als organische Säuren kommen besonders in Frage Weinsäure, Milchsäure, Apfelsäure und Citronensäure, wobei Citronensäure wegen des damit erreichbaren niedrigen pH-Wertes von 2 bis 3 besonders bevorzugt ist.

Die Fällung der gelösten Copolymere kann in einer Stufe vorgenommen werden, was bevorzugt ist, wenn die Lösung im wesentlichen aus einem einheitlichen Polymer besteht. Es ist jedoch auch eine stufenweise, d.h. fraktionierte Fällung möglich, um bei Vorhandensein verschiedener Polymere eine fraktionierte Ausfällung je nach pH-abhängiger Löslichkeit zu erzielen.

Nach der Ausfällung wird eine Fest/Flüssigtrennung vorgenommen. Die flüssige Phase, die im wesentlichen eine wässrige Lösung des Fällungsreagens als Salz enthält, wobei das Natriumsalz aufgrund bei der Auflösung verwendetem Natriumhydroxid oder Natriumcarbonat bevorzugt ist, ist schwach sauer bis sauer (pH 2 bis 4) und besitzt eine Temperatur, die unterhalb der Gärtemperatur im Bioreaktor liegt. Diese Lösung eignet sich mindestens zum Teil zur Rückführung in die Pufferzone, um dort den pH-Wert und die Temperatur auf die für den Bioreaktor geeigneten Bedingungen abzusenken. Wird als Fällungsreagens eine vergärbare organische Säure verwendet, so zersetzt sich diese im Bioreaktor, so daß eine Anreicherung an Fällungsreagens in der Lösung vermieden wird. Das bei der Zersetzung des Alkalisalzes des Fällungsreagens wieder freigesetzte Alkali steht dann erneut zur Bindung von gebildetem $CO_2$ zur Verfügung. Auf diese Weise steht das Alkalisalz des Fällungsreagens auch als pH-Puffer zur Verfügung.

Als Kunststoffe, die sich sowohl für Verpakkungsmaterialien, Essgeschirr und dergleichen eignen und durch das erfindungsgemäße Verfahren wieder aufgearbeitet werden können, kommen besonders Carboxylgruppen enthaltende Polymere und insbesondere Copolymere in Frage. Hierzu gehören insbesondere Copolymere von neutralen Vinylmonomeren mit , ungesättigten Mono- und/oder Dicarbonsäuren und/oder Anhydriden der Dicarbonsäuren. Als Carbonsäuren kommen besonders Acrylsäure, Methacrylsäure, Crotonsäure, Itaconsäure und Maleinsäure in Betracht. Geeignete Vinylmonomere sind Alkylacrylate und Alkylmethacrylate, wobei solche mit 1 bis 18, insbesondere 1 bis 6 Kohlenstoffatomen in der Alkoholkomponente bevorzugt sind, weiterhin Styrol. Die Polymere können auch in Form von Terpolymeren vorliegen, wobei das Termonomere vorzugsweise ein neutrales Monomer ist, das vom anderen neutralen Monomer verschieden ist. Solche Polymere sind bekannt und beispielsweise in den DE-OS 33 35 954 und DE-OS 34 35 468 beschrieben. Dabei ist der Carboxylgruppengehalt in Abhängigkeit vom hydrophoben Charakter der neutralen Monomere vorzugsweise so eingestellt, daß die Polymere in neutralem und saurem Medium unlöslich und in alkalischem Medium über pH 8 bis 13 löslich und durch Ansäuern wieder ausfällbar sind.

Derartige Polymere neigen beim Ausfällen dazu, klebrige Massen zu bilden, die zur Klumpenbildung neigen und nur schwierig weiterzuverarbeiten sind. Zur Vermeidung dieser Klumpenbildung ist bei einer bevorzugten Ausführungsform des erfindungsgemäßen Verfahrens vorgesehen, die Ausfällung in Gegenwart starker Turbulenz durchzuführen (Reynolds-Zahl vorzugsweise oberhalb 2000). Durch diese innige Vermischung fällt das Polymere in Form einer Vielzahl von Partikeln an. Die Reaktionspartner durchströmen die turbulente Zone im wesentlichen kontinuierlich und kurzzeitig (vorzugsweise innerhalb von 0,1 bis 2,0 Sek.). Unmittelbar nach Verlassen der Vermischungszone wird die Strömung in eine laminare Strömung umgewandelt, so daß die Partikel in voneinander getrenntem Zustand reifen können. Während der Reifung verfestigen sich die Partikel und verlieren ihre Klebrigkeit. Sie können dann leicht vom wässrigen Medium getrennt werden, was vorzugsweise mit Hilfe eines Plattenfilters insbesondere in Form eines sogenannten Bogensiebes mit bogenförmig aneinandergelegten Metallplatten erfolgt. Das dabei erhaltene wasserhaltige Pulver bzw. Granulat, dessen Teilchengröße vorzugsweise zwischen ca. 1 mm und 10 mm Durchmesser liegt, ist soweit verfestigt, daß es beispielsweise durch Abpressen, soweit entwässert werden kann, daß es ohne weitere Vorbehandlung in einem Extruder mit Entgasungseinrichtungen vollständig entwässert und einer termoplastischen Weiterverarbeitung unterworfen werden kann. In der Regel wird das Produkt zunächst zu einem Granulat oder Pellets verarbeitet und kann dann je nach Verwendungszweck geformt oder vorher frischem Material beigemischt werden.

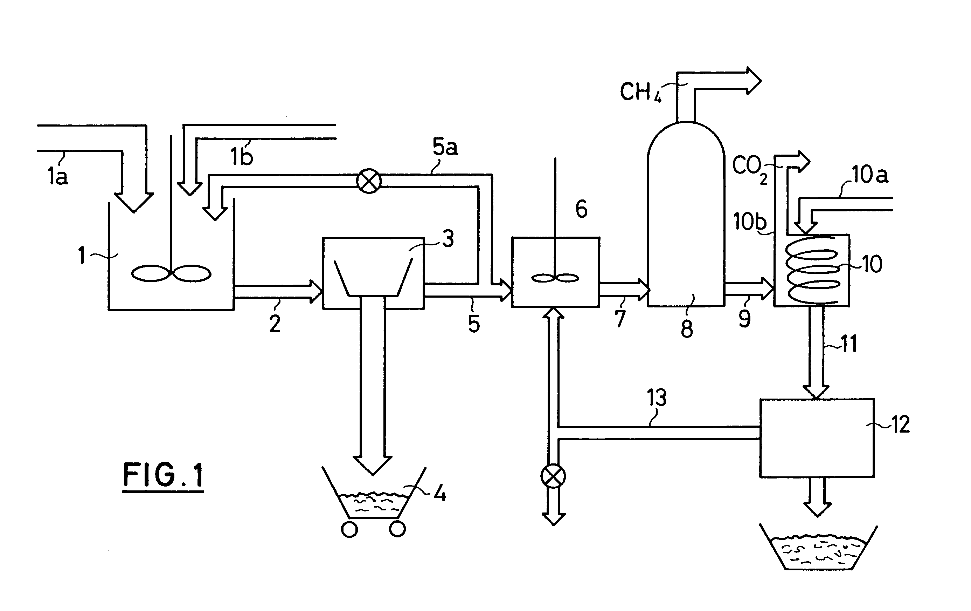

Weitere Merkmale, Einzelteile und Vorteile der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich alleine oder zu mehreren in Kombination miteinander verwirklicht sein.

In der Zeichnung ist ein Verfahrensschema zur Durchführung des erfindungsgemäßen Verfahrens gemäß einer bevorzugten Ausführungsform ausgehend von verunreinigten Kunststoffabfällen bis zum gereinigten Kunststoff dargestellt.

Die in der Zeichnung dargestellte Verfahrensführung wird anhand eines Ausführungsbeispieles erläutert.

600 kg Müll aus einem Fastfood-Restaurant, welcher ca. 60 kg gebrauchtes Kunststoff-Geschirr (Teller, Becher, Besteck) sowie 540 kg Speisereste sowie andere biologische und organische Substanzen wie Papier, Papierservietten, Zigarettenschachteln, Zigarettenstummel, Streichhölzer enthält, werden in einem in der Zeichnung nicht dargestellten Shredder zunächst grob zerkleinert und anschließend bei 1a in einen Stofflöser 1 geführt, dem gleichzeitig wässrige Natronlauge bei 1b zugeführt wird, die bezogen auf die Müllmenge, 25 kg NaOH enthält. Aufgrund der hohen Scherkräfte im Stofflöser findet während der Auflösung gleichzeitig eine mechanische Zerkleinerung statt, so daß den Stofflöser 1 durch eine Leitung 2 eine Suspension verläßt, die die gelösten Kunststoffe, gelöste organische Bestandteile sowie feinteiligen ungelösten Müll enthält. Diese Suspension wird in einer Dekanterzentrifuge 3 einer Fest/Flüssigtrennung unterworfen, die abgetrennten Feststoffe werden in einem Behälter 4 aufgefangen und können einer Kompostierung oder anderweitigen Verwertung zugeführt werden. Die wässrig alkalische Polymerlösung, die einen pH-Wert von 11 bis ca. 12 besitzt, kann, falls erwünscht, teilweise durch Leitung 5a zur Aufkonzentrierung des Polymermaterials in den Stofflöser 1 zurückgeführt werden. Gewöhnlich wird sie durch Leitung 5 in einen Pufferbehälter 6 geleitet, der eine mehrfache Funktion besitzt. Zum einen dient er dazu, die der nachgeschalteten bakteriellen Zersetzung zu unterwerfende Lösung durch Leitung 7 im wesentlichen kontinuierlich abfließen zu lassen, auch dann, wenn dem Stofflöser 1 der Müll diskontinuierlich zugeführt wird. Zum anderen dient der Pufferbehälter zur Einstellung des pH-Wertes und der Temperatur auf die für die bakterielle Zersetzung geeigneten Werte. Hierzu wird die Temperatur zweckmäßig auf ca. 50°C eingestellt, um für die bei Temperaturen von 35 bis 40°C endotherm ablaufende bakterielle Zersetzung noch eine ausreichende Wärmemenge zum Ausgleich der Energiebilanz zur Verfügung zu haben. Der pH-Wert der wässrig alkalischen Lösung wird im Pufferbehälter 6 auf pH 8,5 bis 10,5 gesenkt, damit sich im Methanreaktor 8 ein für die anaerobe Gärung günstiger pH-Wert von ca. 8,5 einstellt. Diese Einstellung im Methanreaktor erfolgt aufgrund der weiteren pH-Absenkung durch Neutralisierung des vorhandenen Alkalis in Folge der $CO_2$-Bildung. Im Methanreaktor 8 wird unter anaeroben Bedingungen gearbeitet. Der Methanreaktor ist teilweise mit Füllkörpern angefüllt, wobei Zeolithgranulate bevorzugt sind. Auf diesen Füllkörpern sind Bakterienkulturen angewachsen, die den vergärbaren organischen Bestandteilen der Polymerlösung vorzugsweise angepaßt sind. Dies kann durch Initiierung der anaeroben Gärung mit Hilfe von Klärschlamm erreicht werden, der eine Vielzahl von verschiedenen Bakterienstämmen enthält, von denen sich dann bevorzugt diejenigen vermehren, die die vergärbaren organischen Bestandteile verarbeiten können. Das während der anaeroben Gärung entstehende Methan kann am oberen Ende des Methanreaktors abgezogen und einer weiteren Verwendung, beispielsweise zur Beheizung des Stofflösers, zugeführt werden. Der Methanreaktor 8 ist vorzugsweise temperierbar, insbesondere heizbar, um, falls notwendig, geeignete Temperatureinstellungen vornehmen zu können. Durch Leitung 9 verläßt den Methanreaktor eine gereinigte Polymerlösung, die außer dem Alkalisalz, insbesondere Natriumsalz, der Polymere im wesentlichen nur noch Natriumcarbonat bzw. -hydrogencarbonat enthält. Die ursprünglich mitgeführten bzw. durch Hydrolyse aufgelösten biologischen Verunreinigungen sind durch die anaerobe Gärung im wesentlichen vollständig entfernt. Falls erwünscht, kann im Bereich der Leitung 9 eine Sterilisierung der gereinigten Polymerlösung vorgenommen werden, um das Mitschleppen von Bakterien zu verhindern. Ferner ist an dieser Stelle eine Entfärbung der Lösung mit an sich bekannten Entfärbemitteln möglich. Falls erforderlich, kann hier auch eine zusätzliche Fest/Flüssigtrennung, beispielsweise durch Zentrifugieren, erfolgen. Die gereinigte Polymerlösung gelangt dann in eine Fällungskammer 10, in der sie mit dem Fällungsreagens, das bei 10a zugeführt wird, vermischt wird. Als Fällungsreagens wird bei dieser bevorzugten Ausführungsform eine im Methanreaktor biologisch abbaubare organische Säure verwendet, wobei Citronensäure als relativ starke Säure bevorzugt ist. Die Fällung in der Fällungskammer 10 findet unter turbulenten Bedingungen statt unter denen die Kunststofflösung aus Leitung 9 und die Säure aus Leitung 10a innerhalb kurzer Zeit (0,1 bis 2,0 Sek.) innig miteinander vermischt werden. Dabei liegt der Volumenstrom von Polymerlösung zu Volumenstrom des Fällungsreagens vorzugsweise bei 6 zu 1 bis 8 zu 1. Bei der Ansäuerung entweicht bei 10b Kohlendioxid, das einer Wiederverwendung, z.B. zur Teilneutralisation im Pufferbehälter 6, zugeführt werden kann. Im wesentlichen unmittelbar anschließend an die turbulente Vermischung wird die wässrige Polymersuspension, die vorzugsweise einen pH-Wert von 2 bis 3 besitzt, in eine laminare Strömung überführt, um den feinteiligen Polymerpartikeln eine Reifezeit zu ermöglichen, während derer sie sich von dem ursprünglich klebrigen Zustand in einen festen, nicht mehr klebrigen Zustand umwandeln, ohne sich gegenseitig zu berühren. In der Regel reicht hierzu eine Reifedauer von 2 bis 4 min. aus. Die laminare Strömung wird durch Beruhigung des turbulenten Stromes, insbesondere durch eine starke Querschnittserweiterung, erreicht und kann in einem oder mehreren, ggf. parallelgeschalteten, Reaktions-, bzw. Reiferohren fortgeführt werden, die aus Platzgründen vorzugsweise wendelförmig ausgebildet sind. Dabei sind die Rohre vorzugsweise so angeordnet, daß die Achse der Rohre bzw. der Wendeln im wesentlichen vertikal verläuft. Die Strömungsgeschwindigkeit der laminaren Strömung liegt vorzugsweise im Bereich von $5 \times 10^{-5}$ bis $10^{-2}$ m/s insbesondere bei $5 \times 10^{-4}$ bis $5 \times 10^{-3}$ m/s. Die Reynolds-Zahl der laminaren Strömung liegt unter 1000, vorzugsweise unter 100, wobei Bereiche von 0,5 bis 10 besonders bevorzugt sind.

Im Anschluß an die laminare Reifung werden die Polymerteilchen von der Salzlösung der Fällungssäure abgetrennt, was vorzugsweise drucklos erfolgt, um ein noch mögliches Zusammenbacken der Polymerteilchen zu vermeiden. Die Fest/Flüssigtrennung erfolgt vorzugsweise mit Hilfe eines Siebes bzw. Filters, wobei ein Bogensieb bevorzugt ist. Die Polymere werden dann in Form von diskreten, noch stark wasserhaltigen (50 bis 80 Gew.-% Wasser) Polymerteilchen erhalten, die beispielsweise durch vorsichtiges Abpressen weiter entwässert werden können. Die Polymerteilchen sind rein genug, um sie ohne weitere Aufbereitung weiter verarbeiten zu können. Sie sind insbesondere zur Weiterverarbeitung in einem Extruder mit Entgasungseinrichtung geeignet, da sie in einer für die Beschickung eines Extruders geeigneten Größe vorliegen. Die restlichen Wassermengen werden durch die Entgasungseinrichtungen des Extruders entfernt.

Das aus dem Bogensieb 12 durch Leitung 13 ablaufende Filtrat wird mindestens teilweise in den Pufferbehälter 6 rückgeführt, wo es zur Abkühlung und pH-Einstellung der wässrig alkalischen Polymerlösung dient. Überschüssiges Filtrat kann abgelassen werden.

**Patentansprüche**

1. Verfahren zur Aufbereitung und Reinigung von in alkalischem Medium löslichen, mit biologischem Material und ggf. anderen Stoffen verunreinigten festen Polymeren, bei dem die verunreinigten Polymere in wässrig alkalischem Medium gelöst, von nicht gelösten Bestandteilen befreit und durch Ansäuern ausgefällt und wiedergewonnen werden, dadurch gekennzeichnet, daß die Polymerlösung vor dem Ansäuern zur Entfernung biologischer Verunreinigungen einer bakteriellen Zersetzung unterworfen wird.

2. Verfahren nach Anspruch 1, dadurch gekennzeichnet, daß die bakterielle Zersetzung als anaerobe Zersetzung durchgeführt wird.

3. Verfahren nach Anspruch 1 oder 2, dadurch gekennzeichnet, daß die anaerobe Zersetzung durch eine Impfung mit Klärschlamm eingeleitet wird.

4. Verfahren nach einem der vorhergehenden Ansprüche, dadurch gekennzeichnet, daß die bakterielle Zersetzung in einem Bioreaktor, vorzugsweise einem Fließbettreaktor durchgeführt wird, in dem die Bakterien immobilisiert sind.

5. Verfahren nach einem der vorhergehenden Ansprüche, dadurch gekennzeichnet, daß die bakterielle Zersetzung in einem Bioreaktor durchgeführt wird, der Füllkörper, insbesondere Füllringe, Kugeln oder Granulat, vorzugsweise aus Zeolithen, enthält.

6. Verfahren nach einem der vorhergehenden Ansprüche, dadurch gekennzeichnet, daß die bakterielle Zersetzung kontinuierlich durchgeführt wird.

7. Verfahren nach einem der vorhergehenden Ansprüche, dadurch gekennzeichnet, daß die bakterielle Zersetzung bei einem pH-Wert zwischen pH 8 und pH 9, vorzugsweise bei ca. pH 8,5 durchgeführt wird.

8. Verfahren nach einem der vorhergehenden Ansprüche, dadurch gekennzeichnet, daß die bakterielle Zersetzung bei Temperaturen im mesophilen Bereich, insbesondere bei 35 bis 40°C durchgeführt wird.

9. Verfahren nach einem der vorhergehenden Ansprüche, dadurch gekennzeichnet, daß der bakteriellen Zersetzung eine Pufferzone vorgeschaltet ist, in der der pH-Wert der der bakteriellen Zersetzung zu unterwerfenden alkalischen Lösung auf etwa pH 8,5 bis 10,5 reguliert, insbesondere abgesenkt wird.

10. Verfahren nach einem der vorhergehenden Ansprüche, insbesondere nach Anspruch 9, dadurch gekennzeichnet, daß die Temperatur der der bakteriellen Zersetzung zu unterwerfenden alkalischen Lösung auf ca. 50°C eingestellt, insbesondere abgesenkt wird.

11. Verfahren nach einem der vorhergehenden Ansprüche, dadurch gekennzeichnet, daß eine wässrig alkalische Lösung der verunreinigten Polymere hergestellt wird, indem das Polymermaterial zusammen mit den Verunreinigungen, ggf. nach vorheriger mechanischer Zerkleinerung, unter Einwirkung von Scherkräften in wässrigem Alkali, insbesondere Natriumhydroxid, vorzugsweise während einer Zeitdauer von 30 bis 60 min., einer Auflösung bis zur Bildung einer Suspension unterworfen wird und dann vorzugsweise von mitgeführten Feststoffen befreit wird.

12. Verfahren nach Anspruch 11, dadurch gekennzeichnet, daß die Auflösung in einem Stofflöser, insbesondere einem Kessel mit Rührwerk durchgeführt wird.

13. Verfahren nach einem der vorhergehenden Ansprüche, dadurch gekennzeichnet, daß als verunreinigte Polymere Abfälle von aus den in wässrig alkalischem Medium lösbaren Kunststoffen, insbesondere gebrauchte Lebensmittelverpackungen und/oder Essgeschirr, eingesetzt werden, die mit Nahrungsmittelresten und ggf. Papierservietten sowie Fremdmüll verunreinigt sind.

14. Verfahren nach einem der vorhergehenden Ansprüche, dadurch gekennzeichnet, daß die Auflösung der verunreinigten Polymere bei pH 11 bis 12,5 vorgenommen wird und danach unlösliche Bestandteile aus der erhaltenen Suspension abgetrennt, vorzugsweise abzentrifugiert werden.

15. Verfahren nach einem der vorhergehenden Ansprüche, dadurch gekennzeichnet, daß das Ausfällen der Polymere aus der im Anschluß an die bakterielle Zersetzung erhaltenen gereinigten Lösung mit Hilfe mindestens einer durch die bakterielle Zersetzung biologisch abbaubaren Säure vorgenommen wird und die nach dem Abtrennen des ausgefällten Polymers erhaltene Lösung mindestens teilweise mit der für die bakterielle Zersetzung vorgesehenen alkalischen Polymerlösung zur Einstellung des pH-Wertes und/oder der Temperatur vereinigt wird.

16. Verfahren nach einem der vorhergehenden Ansprüche, dadurch gekennzeichnet, daß als in wässrig alkalischem Medium auflösbare Polymere Carboxylgruppen enthaltende Polymere, insbesondere Polymere von ungesättigten Carbonsäuren mit Vinylmonomeren vorgesehen sind.

FIG.1